# EUROPEAN PATENT APPLICATION

(11) **EP 4 246 761 A1**
(43) Date of publication of application: **20.09.2023**
(21) Application number: 22823306.0
(22) Date of filing: 14.12.2022
(51) Int. Cl.: H02J 7/00, H01M 10/44

(54) **ELECTRONIC DEVICE FOR SUPPRESSING HEATING**

(30) Priority: 25.01.2022 KR 20220010547; 25.04.2022 KR 20220050952
(71) Applicant: Samsung Electronics Co., Ltd., Gyeonggi-do 16677 (KR)
(72) Inventor: KANG, Seungbeom, Suwon-si, Gyeonggi-do 16677 (KR); KWON, Hyungjun, Suwon-si, Gyeonggi-do 16677 (KR); SONG, Jaeho, Suwon-si, Gyeonggi-do 16677 (KR); OH, Hyunjun, Suwon-si, Gyeonggi-do 16677 (KR); JANG, Byeonghyun, Suwon-si, Gyeonggi-do 16677 (KR); HA, Jaemu, Suwon-si, Gyeonggi-do 16677 (KR)
(74) Representative: HGF
(86) International application number: PCT/KR2022/020345
(87) International publication number: WO 2023/146128

(57) **Abstract**

Various embodiments may provide a method of operating an electronic device. The method may include recognizing that an external device connected to the connector of the electronic device is a power supply device having a function of changing a voltage value and a current value through a communication circuit of the electronic device; selecting the direct charging circuit between the direct charging circuit and the switching charging circuit of the electronic device as a charging circuit through which the power signal received from the power supply device through the power supply terminal is to pass, based on the recognition; and identifying the voltage of the battery while the direct charging circuit is selected, based on the occurrence of a specified event, and requesting the power supply device through the communication circuit to output a power signal having a voltage value that is N times the battery voltage. In addition, various embodiments are possible.

## Description

### [Technical Field]

Various embodiments relate to a technology for supplying power of a charger to a load circuit and a battery of an electronic device.

### [Background Art]

A charger (e.g., a travel adapter) may be configured to be connected by wire to an electronic device and supply power to the electronic device. The battery of the electronic device (e.g., a smartphone) may be charged by using power supplied from the charger, and the power may be supplied to the load circuit (e.g., a processor) for operation of the load circuit. For example, the power supplied from the charger to the electronic device may be distributed to the battery and the load circuit through a power management circuit.

### [Disclosure of Invention]

### [Technical Problem]

When power consumed in a load circuit is greater than a supplied power, power of a battery may be discharged to the load circuit for the balance between the supply and the consumption. When the power consumption is relatively small, the residual of the supplied power may be supplied to the battery so that the battery can be charged.

When/while the battery is charged, the inner temperature of the battery may rise. When the battery is continuously exposed to or at a high temperature, a battery lifetime may deteriorate. An overheating control operation for suppressing an increase in the inner temperature and/or reducing the inner temperature may be performed in an electronic device. For example, the magnitude (e.g., a current value) of power supplied from the charger to the electronic device may be reduced.

A load circuit may consume a large amount of power to execute an application (e.g., a game) requiring high performance. The inner temperature of the battery that is being charged may further increase due to the heat generated while a large amount of power is consumed, and a voice of customer (VOC) for overheating (e.g., user complaints about overheating during game playing) may occur. Additionally, battery lifetime may deteriorate. When an overheating control operation for suppressing heat generation is performed, supplied power may be reduced, and accordingly, the performance of the load circuit may be degraded and a VOC for the performance degradation (e.g., user complaints about a slowdown in game playing) may occur. Additionally, the performance of an application on the electronic device may degrade or deteriorate.

Various embodiments of the document may provide an electronic device for suppressing, reducing or mitigating an increase in an inner temperature of a battery by supplying power of a charger (a power supply device) to a load circuit rather than a battery. The technical problems to be solved in the disclosure are not limited to the above-described technical problems, and other technical problems that are not mentioned can be clearly understood from the description below by those skilled in the art to which the document belongs.

### [Solution to Problem]

An electronic device according to various embodiments may include: a battery; a load circuit configured to receive power; a connector including a power terminal and a data terminal; a direct charging circuit including a first input terminal connected to the power terminal and a first output terminal connected to the battery and the load circuit and configured to convert a voltage value and a current value of a power signal input to the first input terminal from an external device such that the direct charging circuit lowers the voltage of the power signal input to the first input terminal by 1/N and increases the current by N times to output the voltage to the battery and/or the load circuit through the first output terminal; a switching charging circuit including a second input terminal connected to the power terminal and a second output terminal connected to the battery and the load circuit and configured to convert at least one of a voltage value and a current value of a power signal input through the second input terminal from the external device to output converted values to the battery and/or the load circuit through the second output terminal; a communication circuit configured to communicate with the external device through the data terminal; a processor operatively connected to the direct charging circuit, the switching charging circuit, and the communication circuit, the processor included in the load circuit; and a memory operatively connected to the processor, wherein the memory stores instructions to, when executed, cause the processor to: recognize through the communication circuit that an external device connected to the connector is a power supply device having a function of changing a voltage value and a current value; select, based on the recognition, the direct charging circuit as a charging circuit through which the power signal received from the power supply device through the power supply terminal is to pass; and while the direct charging circuit is selected, based on the occurrence of a specified event, identify the voltage of the battery and request the power supply device through the communication circuit to output a power signal having a voltage value that is N times the battery voltage.

Various embodiments may provide a method of operating an electronic device. The electronic device may include: a battery; a load circuit configured to receive power; a connector including a power terminal and a data terminal; a direct charging circuit including a first input terminal connected to the power terminal and a first output terminal connected to the battery and the load circuit and configured to convert a voltage value and a current value of a power signal input to the first input terminal from an external device such that the direct charging circuit lowers the voltage of the power signal input to the first input terminal by 1/N and increases the current by N times to output the voltage to the battery and/or the load circuit through the first output terminal; a switching charging circuit including a second input terminal connected to the power terminal and a second output terminal connected to the battery and the load circuit and configured to convert at least one of a voltage value and a current value of a power signal input through the second input terminal from the external device to output converted values to the battery and/or the load circuit through the second output terminal; and a communication circuit configured to communicate with the external device through the data terminal. The method may include: recognizing that an external device connected to the connector is a power supply device having a function of changing a voltage value and a current value through the communication circuit; selecting, based on the recognition, the direct charging circuit as a charging circuit through which the power signal received from the power supply device through the power supply terminal is to pass; and while the direct charging circuit is selected, based on the occurrence of a specified event, identifying the voltage of the battery and requesting the power supply device through the communication circuit to output a power signal having a voltage value that is N times the battery voltage.

### [Advantageous Effects of Invention]

According to various embodiments, an electronic device can suppress, reduce or mitigate an increase in an inner temperature of a battery by supplying power of a charger to a load circuit rather than a battery during occurrence of a specific event (e.g., execution of game) corresponding to a factor causing the temperature to be further increased while a power supply device (charger) for charging the battery is connected to the electronic device. Various other effects directly or indirectly identified through the document can be provided.

### [Brief Description of Drawings]

FIG. 1 is a block diagram of an electronic device in a network environment, according to various embodiments.
FIG. 2 is a block diagram of a power management module and a battery, according to various embodiments.
FIG. 3 is a block diagram of an electronic device configured to supply power to a load circuit and to charge a battery using power received from a power supply device, according to an embodiment.
FIGS. 4, 5, and 6 are diagrams illustrating power transmission paths formed on an electronic device.
FIGS. 7 and 8 illustrate user interface (UI) screens provided through a display so that a user can set whether to activate a low heat generation function in an electronic device.
FIG. 9 is a flowchart illustrating operations for suppressing heat generation in an electronic device, according to an embodiment.
FIG. 10 is a flowchart illustrating operations for suppressing SOC change, according to an embodiment.

### [Mode for the Invention]

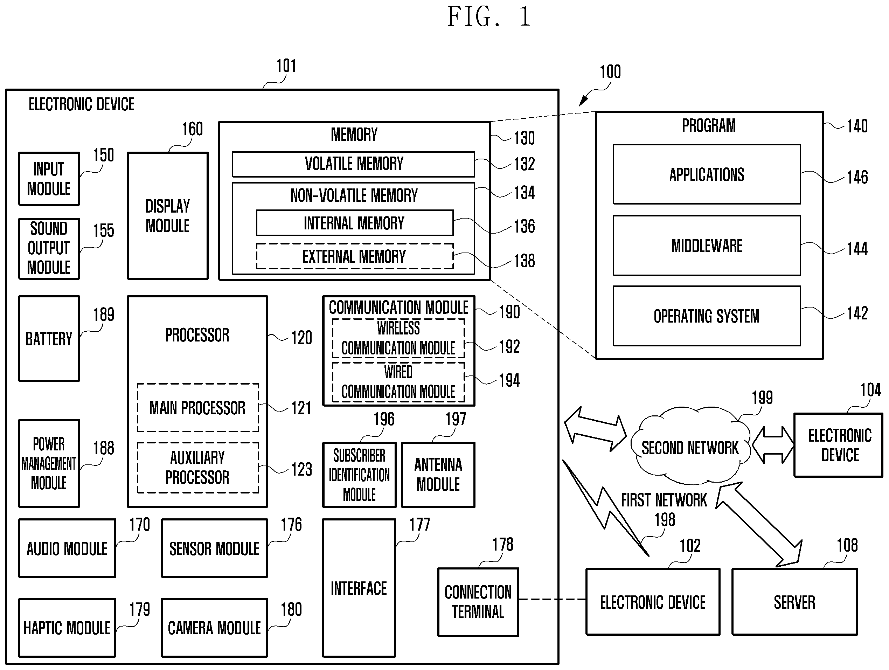

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

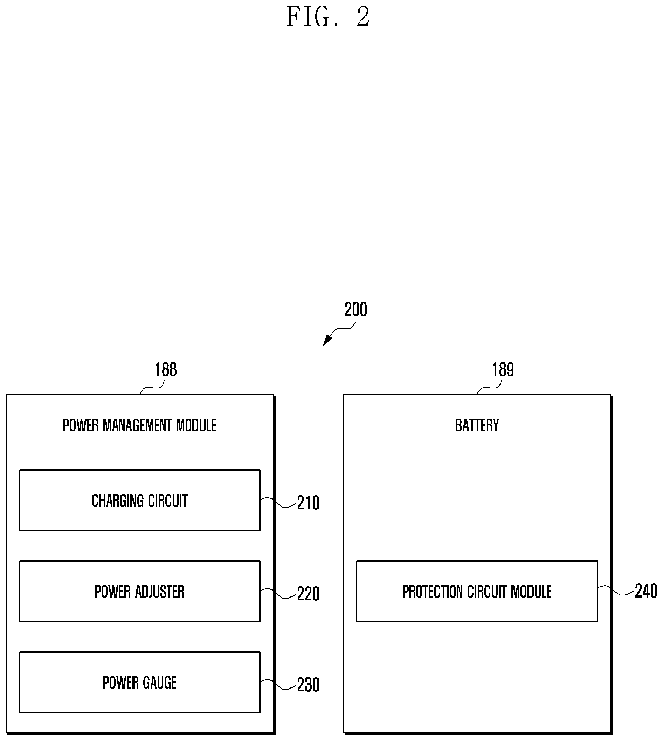

Fig. 2 is a block diagram 200 illustrating the power management module 188 and the battery 189 according to various embodiments. Referring to Fig. 2, the power management module 188 may include charging circuitry 210, a power adjuster 220, or a power gauge 230. The charging circuitry 210 may charge the battery 189 by using power supplied from an external power source outside the electronic device 101. According to an embodiment, the charging circuitry 210 may select a charging scheme (e.g., normal charging or quick charging) based at least in part on a type of the external power source (e.g., a power outlet, a USB, or wireless charging), magnitude of power suppliable from the external power source (e.g., about 20 Watt or more), or an attribute of the battery 189, and may charge the battery 189 using the selected charging scheme. The external power source may be connected with the electronic device 101, for example, directly via the connecting terminal 178 or wirelessly via the antenna module 197.

The power adjuster 220 may generate a plurality of powers having different voltage levels or different current levels by adjusting a voltage level or a current level of the power supplied from the external power source or the battery 189. The power adjuster 220 may adjust the voltage level or the current level of the power supplied from the external power source or the battery 189 into a different voltage level or current level appropriate for each of some of the components included in the electronic device 101. According to an embodiment, the power adjuster 220 may be implemented in the form of a low drop out (LDO) regulator or a switching regulator. The power gauge 230 may measure use state information about the battery 189 (e.g., a capacity, a number of times of charging or discharging, a voltage, or a temperature of the battery 189).

The power management module 188 may determine, using, for example, the charging circuitry 210, the power adjuster 220, or the power gauge 230, charging state information (e.g., lifetime, over voltage, low voltage, over current, over charge, over discharge, overheat, short, or swelling) related to the charging of the battery 189 based at least in part on the measured use state information about the battery 189. The power management module 188 may determine whether the state of the battery 189 is normal or abnormal based at least in part on the determined charging state information. If the state of the battery 189 is determined to abnormal, the power management module 188 may adjust the charging of the battery 189 (e.g., reduce the charging current or voltage, or stop the charging). According to an embodiment, at least some of the functions of the power management module 188 may be performed by an external control device (e.g., the processor 120).

The battery 189, according to an embodiment, may include a protection circuit module (PCM) 240. The PCM 240 may perform one or more of various functions (e.g., a pre-cutoff function) to prevent a performance deterioration of, or a damage to, the battery 189. The PCM 240, additionally or alternatively, may be configured as at least part of a battery management system (BMS) capable of performing various functions including cell balancing, measurement of battery capacity, count of a number of charging or discharging, measurement of temperature, or measurement of voltage.

According to an embodiment, at least part of the charging state information or use state information regarding the battery 189 may be measured using a corresponding sensor (e.g., a temperature sensor) of the sensor module 176, the power gauge 230, or the power management module 188.. According to an embodiment, the corresponding sensor (e.g., a temperature sensor) of the sensor module 176 may be included as part of the PCM 240, or may be disposed near the battery 189 as a separate device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

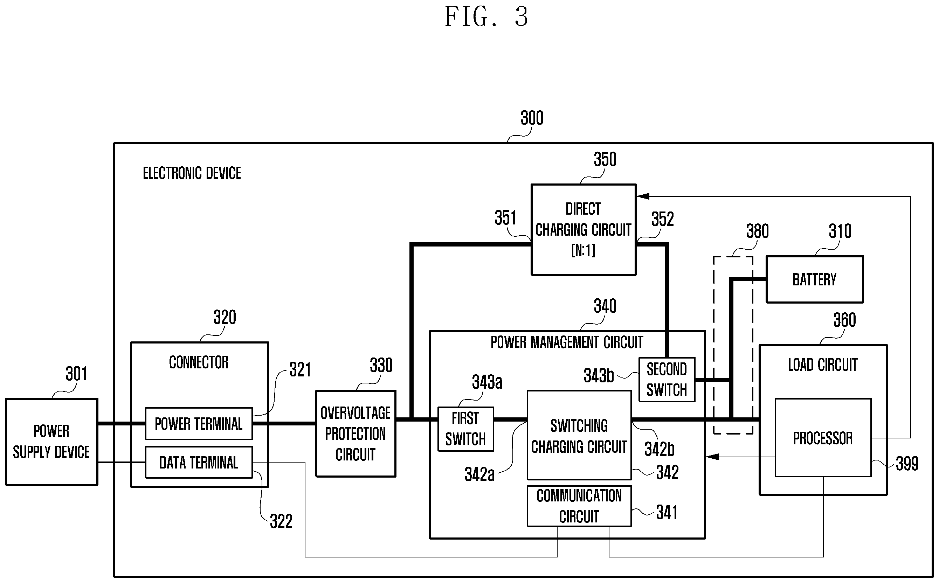

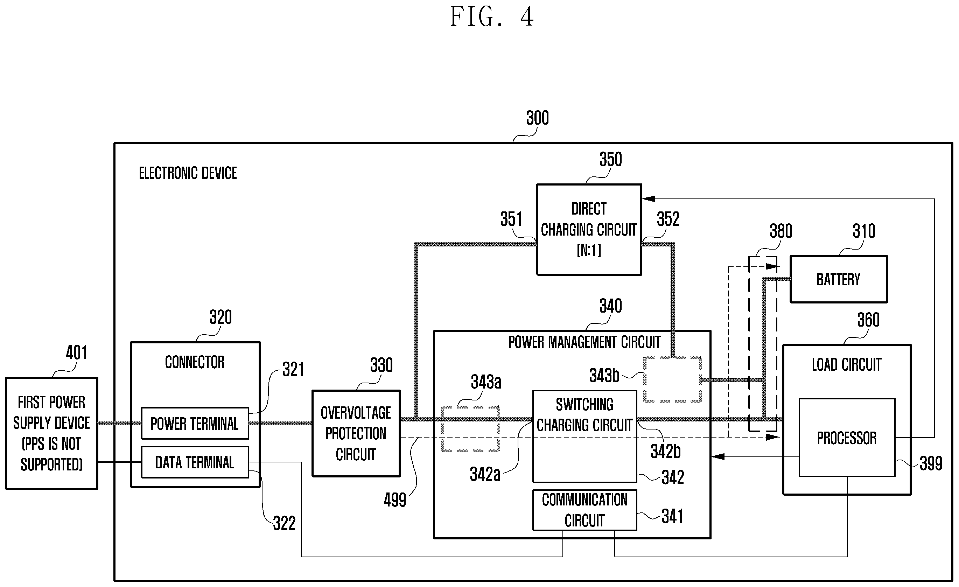

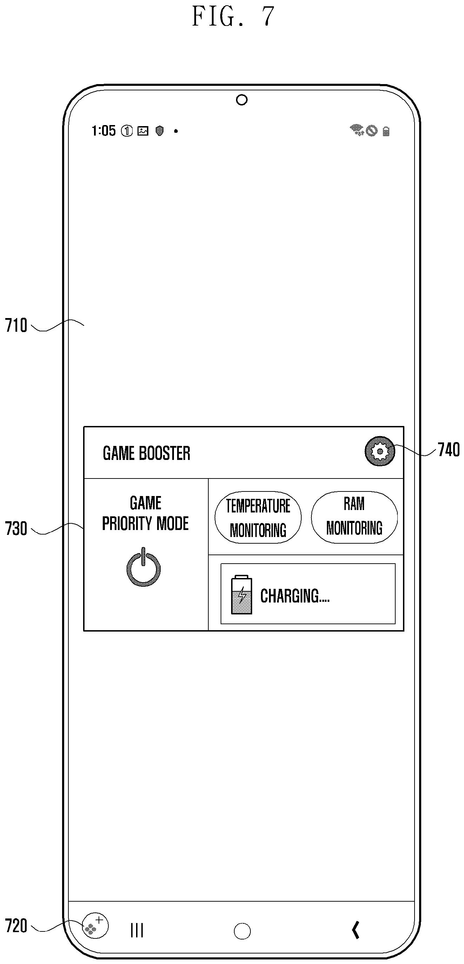

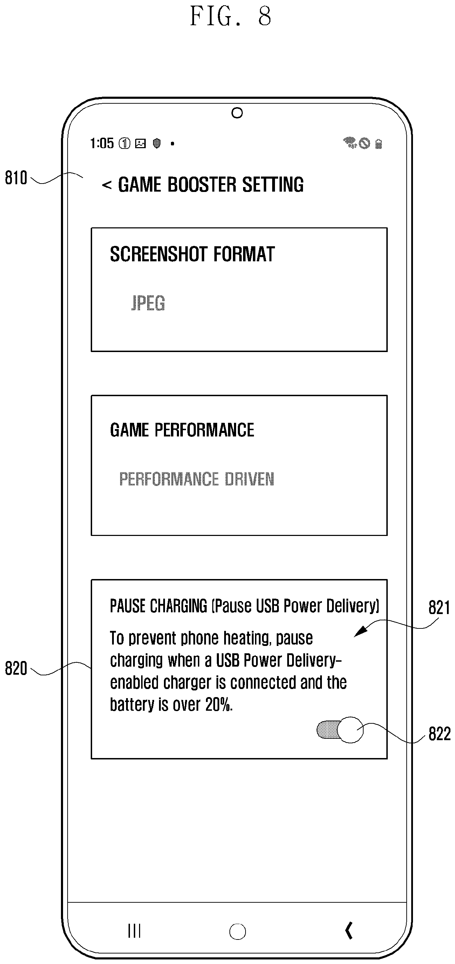

FIG. 3 is a block diagram of an electronic device 300 configured to supply power to a load circuit 360 and charge a battery 310 using power received from a power supply device 301, according to an embodiment. FIGS. 4, 5, and 6 are diagrams illustrating power transmission paths formed on the electronic device 300. FIGS. 7 and 8 illustrate a user interface (UI) screen provided through a display so that a user can set whether to activate a low heat generation function in the electronic device 300.

Referring to FIG. 3, the electronic device 300 (e.g., the electronic device 101 of FIG. 1) may include the battery 310, a connector 320, an overvoltage protection circuit 330, a power management circuit 340, a direct charging circuit 350, and a load circuit (or system) 360. The load circuit 360 may collectively refer to electronic component(s) driven using a power signal received through the power management circuit 340 or the direct charging circuit 350 and/or a power signal received from the battery 310, for example, may include a processor 399 (e.g., the processor 120 of FIG. 1).

The power supply device 301 (e.g., the electronic device 102 of FIG. 1) may include an adapter. For example, the adapter may convert a current characteristic of a power signal input from an external power source from an alternating current (AC) to a direct current (DC) and may adjust the voltage of the power signal to a specified voltage value. The adapter may perform a function of changing current and voltage (e.g., a programmable power supply (PPS)) under the control of the electronic device 300 to receive the power signal. For example, the adapter may lower or increase a current of a power signal to be output to the electronic device 300 in response to a control signal received from the electronic device 300. The adapter may lower or increase a voltage of a power signal to be output to the electronic device 300 in response to a control signal received from the electronic device 300 through a cable. The adapter may be a model that does not support the variable function and outputs the current and/or voltage of the power signal by fixing it to a specified value. When the adapter is a model supporting the variable function, the adapter of the power supply device 301 may change the voltage (or current) of the power signal to be output to the electronic device 300 into a voltage value (or current value) set to charge the battery 310. When the adapter is a model that does not support the variable function, the power management circuit 340 (e.g., the power management module 188 of FIGS. 1 and 2) may adjust the voltage (or current) of the power signal received from the power supply device 301 to a voltage value (or voltage value) set to charge the battery 310. It will be appreciated that the power supply device 301 may be referred to as a power source, power supply, etc. It will also be appreciated that the electronic device 300 may be considered separately to the power supply device 301.

The power supply device 301 may be electrically connected to the connector 320 of the electronic device 300 through a cable (e.g., a USB cable). The power supply device 301 may output a power signal voltage-regulated by an adapter and converted into DC current characteristics to the power terminal 321 of the connector 320 through a cable. The power management circuit 340 may charge the battery 310 using a power signal received from the power supply device 301 through a power terminal 321. In other examples, the power supply device 301 may wirelessly supply power to the electronic device 300, e.g., to the power terminal 321 or to a component of the electronic device 300 configured to receive power wirelessly.

The connector 320 may be configured to perform data communication and power reception. The connector 320 includes a power terminal 321 for receiving a power signal from the power supply device 301 and a data terminal 322 for power delivery (PD) communication between the power supply device 301 and the electronic device 300. For example, the connector 320 may be configured as a universal serial bus (USB) Type-C socket and may be coupled with a plug of a USB cable. Among the pins of the USB Type-C socket, a VBUS pin may be used as the power terminal 321, and a configuration channel 1 (CC1) pin and/or a CC2 pin may be used as the data terminal 322. In certain examples, the power terminal 321 and the data terminal 322 may be provided separately, that is, not both within connector 320. In certain examples, one of the power signal and the data may be transmitted/received wirelessly, and the other one of the power signal and the data may be transmitted/received by via a wire. In certain examples, both the power signal and the data may be transmitted/received wirelessly, or both the power signal and the data may be transmitted/received via a wire or cable.

The overvoltage protection circuit 330 may be connected to the power terminal 321 of the connector 320 to block an overvoltage from flowing into the electronic device 300, and may prevent damage to electronic components (e.g., a power management circuit 340 and a direct charging circuit 350). For example, the overvoltage protection circuit 330 may include a Zener diode.

The power management circuit 340 (e.g., the power management module 188 of FIGS. 1 and 2) may perform data communication for power reception with the power supply device 301 through the data terminal 322 of the connector 320, based on the control of a processor 399. The power management circuit 340 may receive a power signal having a power value determined through data communication from the power terminal 321 of the connector 320 through the overvoltage protection circuit 330. The power management circuit 340 may convert a current value and/or a voltage value of the received power signal based on the control of the processor 399. The power management circuit 340 may supply the converted power signal to the battery 310 and/or the load circuit 360 through a power line 380. In an embodiment, the power management circuit 340 may include a communication circuit 341 and a switching charging circuit 342.

The communication circuit (e.g., a USB controller) 341 may identify the type of the external device connected to the connector 320. For example, the communication circuit 341 may identify whether the external device is the power supply device 301 capable of supplying power and whether the power supply device 301 is a model supporting the PPS function, based on the data received from the external device through the data terminal 322. The communication circuit 341 may transmit identification information indicating the type of the external device (e.g., the power supply device 301) to the processor 399. When the external device is identified as the power supply device 301, the communication circuit 341 may transmit or forward identification information indicating whether the model supports the PPS function to the processor 399. The processor 399 may perform power delivery (PD) communication for charging the battery 310, based on the identification information. For example, the processor 399 may perform an operation of negotiating which of the external device and the electronic device 300 is a source for supplying power and a sink for receiving power by performing PD communication with an external device through the communication circuit 341. When the electronic device 300 is determined as the sink (power receiving device) and the external device is determined as the source (power supplying device 301), the processor 399 may perform an operation of negotiating a power value to be transmitted from an external device by performing PD communication with the power supply device 301 through the communication circuit 341. Although the communication circuit 341 is shown as a component of the power management circuit 340, the communication circuit 341 may be configured as a separate circuit. For example, the communication circuit 341 may be located adjacent to or integrated with the connector 320 and the power management circuit 340 may be disposed on a printed circuit board (PCB).

The battery 310 may be connected to one end of the power line 380 and the load circuit 360 is connected to the other end of the power line 380, so that the load circuit 360 may receive the power signal from the battery 310 through the power line 380.

The switching charging circuit 342 may include an input terminal 342a electrically connected to the power terminal 321 and an output terminal 342b connected to the power line 380. The switching charging circuit 342 may include a buck boost circuit configured to convert the current value and/or the voltage value of the power signal input to the input terminal 342a to output the same to the power line 380 through the output terminal 342b. For example, the switching charging circuit 342 may be configured to adjust a ratio (voltage conversion ratio) of a voltage value of a power signal output to the output terminal 342b to a voltage value of the power signal input to the input terminal 342a. In an embodiment, the switching charging circuit 342 may support constant current (CC) and constant voltage (CV) charging, based on the control of the processor 399. For example, while the charging mode is set to the CC mode, the switching charging circuit 342 may constantly maintain the current of the power signal output from the switching charging circuit 342 to the battery 310 as a charging current value set by the processor 399 so that the voltage of the battery 310 rises to a specified target voltage value. Here, the target voltage value may be equal to the voltage difference between the positive (+) pole and the negative (-) pole of the battery when the battery is in a full charge state. The full charge may mean a state of charge (SOC) when the amount of charge of the battery reaches 100%, which is a set maximum capacity, without fear of burnout or explosion. When the voltage of the battery 310 reaches a target voltage value during battery charging, the charging mode may be switched to the CV mode. When the charging mode is switched from the CC mode to the CV mode by the voltage of the battery 310 reaching the target voltage value, the switching charging circuit 342 may lower the current of the power signal output from the switching charging circuit 342 in stages under the control of the processor 399 so that the voltage of the battery 310 may be maintained at the target voltage value. When the current of the power signal input to the battery 310 is lowered to a current value (e.g., a topoff current value) designated for charging completion during charging of the battery 310 in the CV mode, the switching charging circuit 342 may complete charging of the battery 310 by stopping the output of the power signal to the battery 310 based on the control of the processor 399.

The direct charging circuit 350 may include an input terminal 351 electrically connected to the power terminal 321 and an output terminal 352 connected to the power line 380. The direct charging circuit 350 may include a circuit (e.g., capacitor voltage driver circuit) configured to convert the voltage value of the power signal received from the power supply device 301 through the overvoltage protection circuit 342 into a fixed voltage conversion ratio, to charge the battery 310 at high speed without loss of power (or while minimizing power loss). If the loss rate of power in the direct charging circuit 350 is ideally '0', the ratio of the output power output from the output terminal 352 of the direct charging circuit 350 to the input power input to the input terminal 351 of the direct charging circuit 350 may be '1'. For example, the direct charging circuit 350 may include an N:1 direct charging integrated circuit (DCIC) configured to lower the input voltage by 1/N times (here, N is a natural number of 2 or more) by distributing the voltage input to the input terminal 351 using a plurality of capacitors (e.g., N capacitors) and output the voltage to the power line 380 through the output terminal 352 and configured to increase the current input to the input terminal 351 by N times using a plurality of capacitors and output the current to the power line 380 through the output terminal 352.

The power management circuit 340 may select one of the switching charging circuit 342 and the direct charging circuit 350 as a power converter to convert the current value and/or voltage value of the power signal received from the power supply device 301, based on the control of the processor 399. In an embodiment, the power management circuit 340 may include, for example, a first switch 343a and a second switch 343b as a switch circuit used to select a power converter. The switches 343a and 343b may switch from a closed state (or an on state) to an open state (or an off state) or vice versa, based on the control of the processor 399.

Referring to FIG. 4, one end of the overvoltage protection circuit 330 may be connected to the power terminal 321, one end of the first switch 343a may be connected to the other end of the overvoltage protection circuit 330, the other end of the first switch 343a may be connected to the input terminal 342a of the switching charging circuit 342, and the output terminal 342b of the switching charging circuit 342 may be connected to the battery 310 and the load circuit 360 through the power line 380. The input terminal 351 of the direct charging circuit 350 may be connected to the other end of the overvoltage protection circuit 330, one end of the second switch 343b may be connected to the output terminal 352 of the direct charging circuit 350, and the other end of the second switch 343b may be connected to the battery 310 and the load circuit 360 through the power line 380. When the external device connected to the connector 320 is recognized as the first power supply device 401 of FIG. 4 that does not support the PPS function, the processor 299 may close the first switch 343a and open the second switch 343b so that the switching charging circuit 342 functions as a power converter. Then, the first transmission path 499 of FIG. 4 that allows the power signal passing through the overvoltage protection circuit 330 to reach the battery 310 and the load circuit 360 via the switching charging circuit 342 may be formed on the electronic device 300.

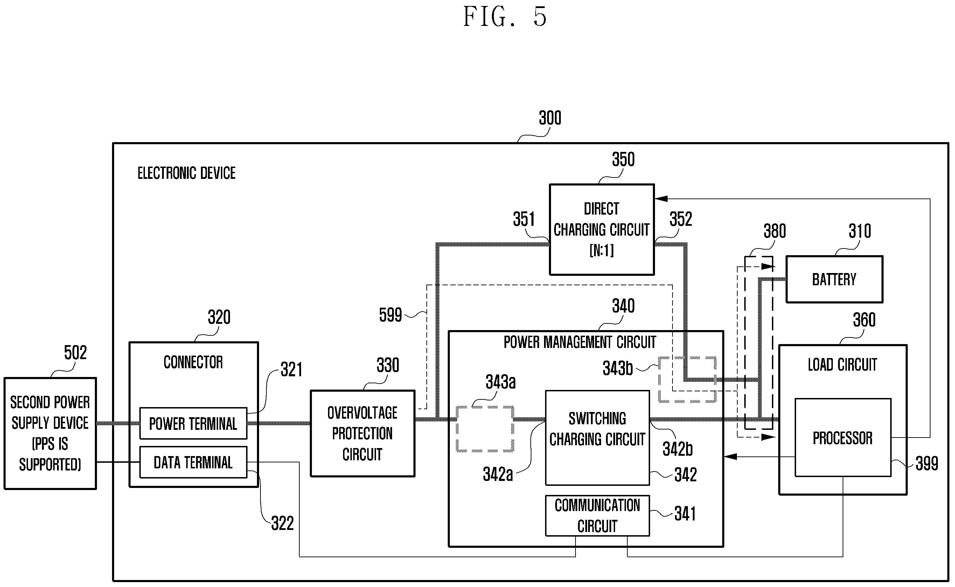

Referring to FIG. 5, when the external device connected to the connector 320 is recognized as the second power supply device 502 of FIG. 5 supporting the PPS function, the processor 299 may open the first switch 343a and close the second switch 343b so that the direct charging circuit 350 functions as a power converter. Then, the second transmission path 599 of FIG. 5 that allows the power signal that has passed through the overvoltage protection circuit 330 to reach the battery 310 and the load circuit 360 via the direct charging circuit 350 may be formed on the electronic device 300.

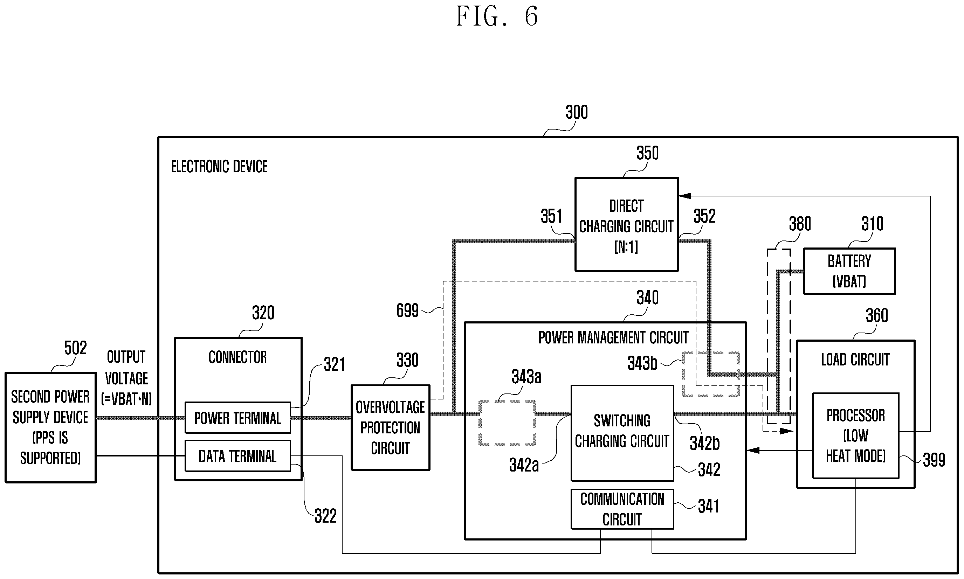

Referring to FIG. 6, when the external device connected to the connector 320 is recognized as the second power supply device 502 and the low heat function (or low heat mode) for suppressing heat in the electronic device 300 is activated, the processor 399 may perform a low heat generation function to pause charging of the battery 310, which is one of the main causes of heat generation, and allowing the power received from the second power supply device 502 to be consumed in the load circuit 360. In an embodiment, the processor 399 may identify the battery voltage "VBAT" from a battery monitoring circuit (e.g., the power gauge 230 or the battery protection circuit 240), and may request the second power supply device 502 via the communication circuit 341 to output a power signal at an output voltage of N times VBAT. In response to the request, the second power supply device 502 may transmit a power signal having an output voltage of VBAT*N to the electronic device 300. Then, the output voltage VOUT of the power signal output from the output terminal 352 of the direct charging circuit 350 may become equal to VBAT, and accordingly, the third transmission path 699 of FIG. 6 that allows the power signal that has passed through the overvoltage protection circuit 330 to reach the load circuit 360 without going to the battery 310 via the direct charging circuit 350 may be formed on the electronic device 300. As an additional condition under which the low heat generation function can be performed, SOC may be considered. For example, the SOC (or the amount of charge) may be quantified as a percentage (%), and when it is greater than or equal to a predetermined ratio (e.g., 20%), the processor 399 may perform the low heat generation function.

The first switch 343a and/or the second switch 343b may be omitted from the configuration of the power management circuit 340. For example, the output terminal 352 of the direct charging circuit 350 may be directly connected to the power line 380, and the input terminal 342a of the switching charging circuit 342 may be directly connected to the overvoltage protection circuit 330. Instead of deactivating the direct charging circuit 350, the processor 360 may activate the switching charging circuit 342 to receive the power signal and to convert and output the voltage value and/or current value. For example, the processor 360 may inactivate the direct charging circuit 350 by blocking the reception of the power signal by opening a switch configured in the direct charging circuit 350, and may activate the switching charging circuit 342 by closing a switch configured in the switching charging circuit 342 to receive a power signal. Accordingly, the first transmission path 499 of FIG. 4 may be formed on the electronic device 300. Instead of deactivating the switching charging circuit 342, the processor 360 may activate the direct charging circuit 350 to receive the power signal and convert and output the voltage value and current value. For example, the processor 360 may activate the direct charging circuit 350 by closing a switch configured in the direct charging circuit 350, and may inactivate the switching charging circuit 342 by opening a switch configured in the switching charging circuit 342. Accordingly, the second transmission path 599 of FIG. 5 or the third transmission path 699 of FIG. 6 may be formed on the electronic device 300.

Although not shown, one or more switches may be located on the power line 380. For example, the switch may be used for the purpose of preventing the battery 310 from being overcharged beyond the full charge voltage and/or from over-discharging the voltage of the battery 310 to a level below the specified minimum value.

There may be a substantial voltage difference even if the output voltage VOUT of the direct charging circuit 350 is set to be the same as VBAT for the low heat function, the current flowing to the load circuit 360 may change (e.g., increase) according to a change in power consumption of the load circuit 360, and the power of the battery 310 may be discharged to the load circuit 360 because the battery 310 is electrically connected to the load circuit 360. In addition, since the battery 310 is electrically connected to the direct charging circuit 350 when the low heat generation function is performed, and as mentioned above, there may be a voltage difference and the current may change (e.g., decrease), when power is supplied to the load circuit 360 through the third transmission path 699, a portion of the power is distributed to the battery 310, so that the battery 310 may be charged. An SOC compensation function for suppressing or mitigating SOC change due to such charging and discharging may be performed by the processor 399.

As an embodiment of the SOC compensation function, the processor 399 may determine that the battery 310 is being charged, based on a monitoring result (e.g., increase in VBAT, increase in SOC, and/or increase in the current value of the power signal flowing into the battery 310) through the battery monitoring circuit. For example, the processor 399 may set the VBAT confirmed at the time when the low heat generation function is started as a voltage reference value for comparison with the VBAT to be identified later. When the identified VBAT is greater than the voltage reference value (or the voltage reference value + a specified voltage value), the processor 399 may determine that the battery 310 is being charged. As another example, the processor 399 may set the SOC identified at the time when the low heat generation function is started as an SOC reference value for comparison with the SOC to be identified later. When the identified SOC is greater than the SOC reference value (or the SOC reference value + a specified SOC value), the processor 399 may determine that the battery 310 is being charged. As another example, when the current value of the power signal flowing into the battery 310 is increasing, the processor 399 may determine that the battery 310 is being charged. As another example, when a combination of at least two of the exemplified cases is established, the processor 399 may determine that the battery 310 is being charged. When the battery 310 is being charged, the processor 399 may perform PD communication with the second power supply device 502 through the communication circuit 341 to lower the output voltage output from the second power supply device 502. For example, the processor 399 may transmit a control signal requesting to lower the output voltage by one step by a unit voltage value (e.g., 20 mV) to the second power supply device 502 through the communication circuit 341. The processor 399 may wait for a predetermined unit time (e.g., 200 ms) and, after monitoring the battery 310, may control the second power supply device 502 to lower the output voltage by one step when it is determined that the battery 310 is still being charged. The output voltage can be stepped down until it transitions to a stopped charging condition.

As an embodiment of the SOC compensation function, the processor 399 may determine that the battery 310 is being discharged, based on a monitoring result (e.g., decrease in VBAT, decrease in SOC, decrease in the current value of the power signal flowing into the battery 310 and/or another characteristic of the battery 310) through the battery monitoring circuit. For example, when the identified VBAT is less than the voltage reference value (or the voltage reference value - the specified voltage value), the processor 399 may determine that the battery 310 is being discharged. As another example, when the identified SOC is less than the SOC reference value (or the SOC reference value - the specified SOC value), the processor 399 may determine that the battery 310 is being discharged. As another example, when the current value of the power signal flowing into the battery 310 is decreasing, the processor 399 may determine that the battery 310 is being discharged. As another example, when a combination of at least two of the exemplified cases is established, the processor 399 may determine that the battery 310 is being discharged. When the battery 310 is being discharged, the processor 399 may perform PD communication with the second power supply device 502 through the communication circuit 341 to increase the output voltage output from the second power supply device 502. For example, the processor 399 may control the second power supply device 502 through the communication circuit 341 to increase the output voltage by one step by a unit voltage value. The processor 399 may wait for a predetermined unit time and may control the second power supply device 502 to increase the output voltage by one step when it is determined that the battery 310 is still being discharged as a result of monitoring. The output voltage may be stepped up until the situation transitions to a stopped-discharged condition.

The processor 399 may provide a menu through the display that allows the user to directly set a reference value for activation of the SOC compensation function. The processor 399 may store information indicating a reference value set through a setting menu in a memory. The processor 399 may compare the monitoring result through the battery monitoring circuit with a reference value stored in the memory, and may determine whether to perform the SOC compensation function, based on the comparison result. For example, when the charge rate of the battery 310 is lower than the stored reference value, the processor 399 may control the power supply device 502 to increase the output voltage.

The processor 399 may change the operating frequency of a switch (e.g., a field effect transistor (FET)) configured in the direct charging circuit 350 to control charging and discharging in the capacitor inside the direct charging circuit 350, so that it is possible to reduce a power loss rate in the direct charging circuit 350 when performing a low heat generation function (e.g., refer to FIG. 6). In other words, the efficiency of the output power compared to the input power is increased to the direct charging circuit 350 through the change of the operating frequency, and heat generation in the direct charging circuit 350 may be reduced during power conversion, which is another major cause of heat generation. Here, the operating frequency may be defined as a frequency that determines the number of times the switch is turned on and off per unit time (hereinafter, the number of ON/OFF times). For example, the capacitor may be charged by closing some of the switches configured in the direct charging circuit 350 and opening others. Conversely, the capacitor may be discharged by closing the others and opening the some of the switches. When the current value of the power signal input to the direct charging circuit 350 is small, the efficiency may be increased by lowering the operating frequency. Efficiency may be increased by increasing the operating frequency when the current value is relatively high. For example, when the battery 310 is being charged, a power signal having a high current value (e.g., 10A) may be output from the direct charging circuit 350. In this case, when the operating frequency is increased, the efficiency of the direct charging circuit 350 may be increased. A power signal having a relatively low current value (e.g., 2A) may be output from the direct charging circuit 350 when the low heat generation function is performed (i.e., when the charging of the battery 310 is stopped). In this case, when the operating frequency is lowered, the efficiency of the direct charging circuit 350 may be increased.

In an embodiment, the processor 399 may change the operating frequency of the direct charging circuit 350 in response to the start of the low heat function. The processor 399 may determine how much to increase or decrease the operating frequency based on information stored in the memory. For example, the information stored in the memory may indicate a first operating frequency (e.g., 1050 kHz) to be set when the battery 310 is being charged and a second operating frequency (lower than the first operating frequency) (e.g., 550 kHz) to be set when the low heat generation function is performed.

In another embodiment, the processor 399 may determine the operating frequency, based on the current value of the power signal output from the direct charging circuit 350. For example, when the current value of the power signal output from the direct charging circuit 350 is equal to or greater than a reference value or threshold (e.g., 2A), the processor 399 may set the operating frequency of the direct charging circuit 350 as the first operating frequency. When the current value of the power signal output from the direct charging circuit 350 is less than the reference value, the processor 399 may set the operating frequency of the direct charging circuit 350 as the second operating frequency.

The processor 399 may display a setting menu that allows the user to set whether to activate the low heat function on the display. The processor 399 may store setting information indicating whether activation is set through the setting menu in the memory. When a specified event occurs, the processor 399 may identify whether the low heat generation function is activated from the setting information. As a result of the identification, when it is set to be activated, the processor 399 may perform a low heat function. When it is set to be inactivated, the low heat function may not be performed. Here, the specified event may be an event (e.g., user input) or execution of a specific application that triggers the performance of the low heat function, for example, that requires the electronic device 300 to execute a specific application (e.g., a game).

Referring to FIGS. 7 and 8, the processor 399 may display a first screen 710 (e.g., a game execution screen) and a first setting icon 720 for setting the performance of the electronic device 300 on the display. When a user input for the first setting icon 720 is received from an input device (e.g., a touch sensitive display) of the electronic device 300, the processor 399 may display a first setting menu 730 on the first screen 710. When a user input for a second setting icon 740 in the first setting menu 730 is received from the input device, the processor 399 may display a second setting menu 810 including an item 820 that allows the user to set whether to activate the low heat generation function on the display. The processor 399 may display information 821 that allows the user to recognize what the low heat generation function is through the item 820. The processor 399 may display an activation icon 822 that allows the user to set whether to activate the low heat generation function through the item 820. The processor 399 may store, in the memory, setting information indicating whether activation is set through the activation icon 822. In a state in which the second power supply device 502 is connected to the electronic device 300 and the battery charge amount is equal to or greater than a predetermined ratio, when a specified event (e.g., a game execution or a user input requesting the execution as an event corresponding to the information 821) occurs, the processor 399 may identify whether the low heat generation function is activated from the setting information. As a result of the identification, when it is set to be activated, the processor 399 may perform a low heat generation function.

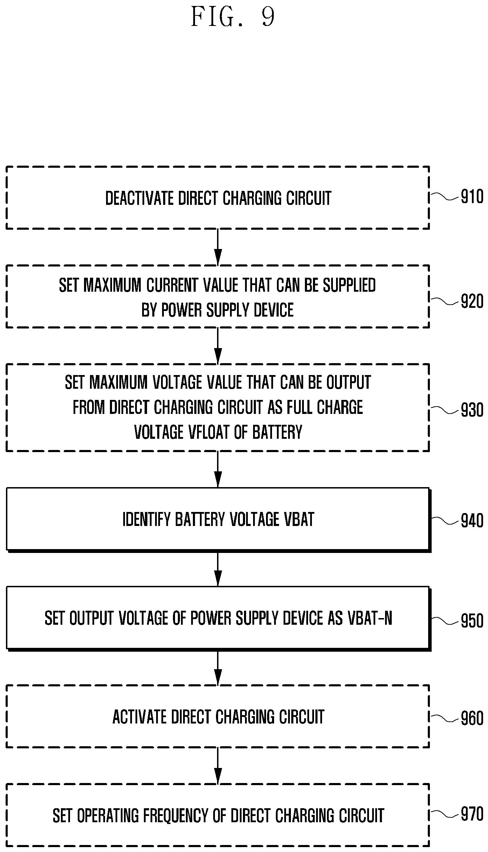

FIG. 9 is a flowchart illustrating operations for suppressing heat generation in an electronic device 300, according to an embodiment. The operations of FIG. 9 may be performed in a case in which an event triggering execution of the low heat function occurs while the power supply device supporting the PPS function (e.g., the second power supply device 502) is connected to the connector 320 of the electronic device 300. In certain embodiments, a battery charge amount may be considered as an additional necessary condition for performing the operations of FIG. 9. For example, the operations of FIG. 9 may be performed only when the charging amount is equal to or greater than a predetermined ratio (e.g., 20 %). The operations of FIG. 9 may be stored in the memory of the electronic device 300 as instructions executed by the processor 399.

In operation 910, the processor 399 may deactivate the direct charging circuit 350. Accordingly, power reception from the power supply device to the electronic device 300 through the connector 320 may be paused.

In operation 920, the processor 399 may request the power supply device through the communication circuit 341 to set a maximum current value that can be supplied from the power supply device in order to secure stability of the load circuit 360 and suppress charging of the battery 310. The power supply device may limit the current value of the power signal output from the power supply device to the electronic device 300 not to exceed the maximum current value requested by the electronic device 300.

In operation 930, the processor 399 may set the maximum voltage value that can be output from the direct charging circuit 350 to the fully charged voltage of the battery 310 (e.g., may be expressed as "VFLOAT") in order to secure the stability of the battery 310. Accordingly, the voltage value VOUT of the power signal output from the output terminal 352 of the direct charging circuit 350 may be limited to VFLOAT or less.

In operation 940, the processor 399 may identify the current voltage "VBAT" of the battery 310 from a battery monitoring circuit (e.g., the power gauge 230 or the battery protection circuit 240).

In operation 950, the processor 399 may request the power supply device through the communication circuit 341 to output a power signal to VBAT with an output voltage of N times. In response to the request, the power supply device may set the voltage value of the power signal to be output to the electronic device 300 as VBAT*N.

In operation 960, the processor 399 may activate the direct charging circuit 350 of the processor 399. Accordingly, a power signal having a voltage value of 'VBAT*N' may be received from the power supply device through the connector 320 to the direct charging circuit 350, and according to a voltage change by the direct charging circuit 350, a power signal having a voltage value of 'VBAT' may be output to the load circuit 360 without going to the battery 310.

In operation 970, the processor 399 may set an operating frequency of the direct charging circuit 350 to suppress heat generation in the direct charging circuit 350. For example, when the operating frequency set before power reception is resumed is the above-described first operating frequency, the processor 399 may change the operating frequency of the direct charging circuit 350 to a second operating frequency lower than the first operating frequency.

Any one or more of operations 910, 920, 930, 960, and 970 may be omitted. For example, in response to a request from the electronic device 300 to set the output voltage to VBAT*N, the power supply device may set the output voltage to VBAT*N and set the maximum value of the output current to a predetermined value. Accordingly, operation 920 may be omitted. The maximum output voltage value of the direct charging circuit 350 may be in a preset state as VFLOAT, and thus operation 930 may be omitted. When the current value of the power signal output from the direct charging circuit 350 is less than a reference value (e.g., 2A), and accordingly, when the operating frequency of the direct charging circuit 350 is set to the second operating frequency, operation 970 may be omitted. Because operations 940 and 950 may be performed without interruption of power reception, operations 910 and 960 may be omitted.

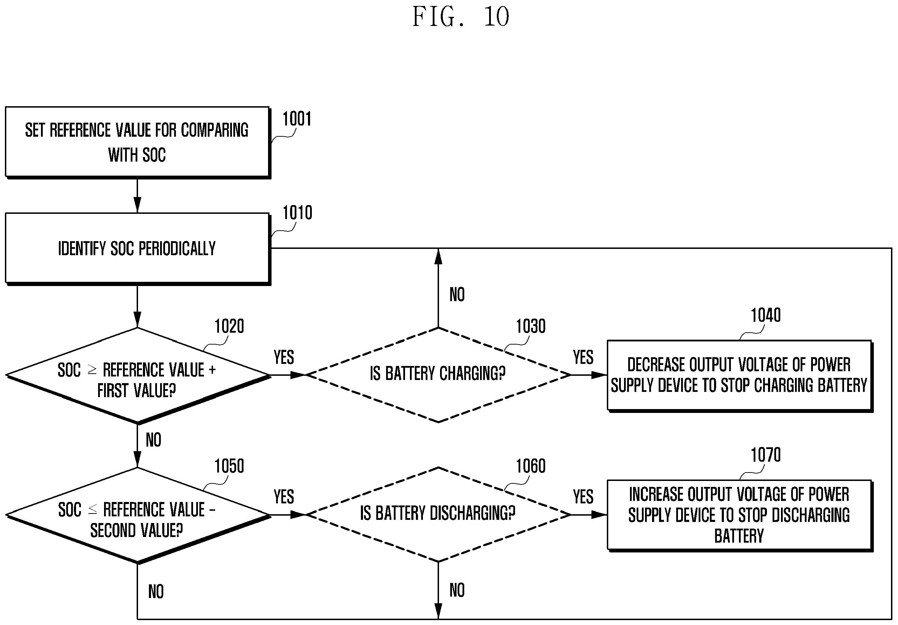

FIG. 10 is a flowchart illustrating operations for suppressing SOC change (in other words, suppressing battery charging and discharging), according to an embodiment. The operations of FIG. 10 may be performed immediately after the operations of FIG. 9 are performed. The operations of FIG. 10 may be stored in the memory of the electronic device 300 as instructions executed by the processor 399.

In operation 1001, the processor 399 may identify the charge amount 'SOC' of the battery 310 at the time when the low heat function starts (e.g., immediately before operation 910 is performed or when VBAT is identified in operation 940), and may set this as a reference value for comparison with the SOC to be identified later.

In operation 1010, the processor 399 may periodically identify the SOC. For example, the SOC may be identified every given period (e.g., 10 seconds). Here, the period may be expressed in terms of time or a term having a similar meaning.

In operation 1020, the processor 399 may determine whether the SOC has increased by more than a first value (e.g., 0.6 %) from a reference value. When it is increased, in operation 1030, the processor 399 may identify the current input to the battery 310 through the monitoring circuit and may determine whether the battery 310 is being charged, based on the result of the identification. When it is confirmed that a current having a magnitude greater than or equal to a predetermined first threshold is input to the battery 310, the processor 399 may determine that the battery 310 is being charged and perform operation 1040. When the magnitude of the current flowing into the battery 310 is less than the first threshold, the processor 399 may perform operation 1010 again. In operation 1040, the processor 399 may request the power supply device through the communication circuit 341 to decrease the output voltage of the power supply device to stop charging the battery 310. For example, the processor 399 may control the power supply device through the communication circuit 341 to lower the output voltage by one step by a unit voltage value (e.g., 20 mV). When it is determined that the battery 310 is still being charged as a result of monitoring the battery 310 after waiting for a predetermined unit time (e.g., 200 ms), the processor 399 may control the power supply device to lower the output voltage by one step. The output voltage can be stepped down until it transitions to a stopped charging condition. In another example, the processor 399 may control the power supply device through the communication circuit 341 to lower the output voltage by a specified amount, e.g., an amount determined by the processor 399.

When it is identified that the SOC does not increase by more than the first value over the reference value, in operation 1050, the processor 399 may identify whether the SOC has decreased by more than the second value (the same as or different from the first value (e.g., 0.4 %)) from the reference value. In operation 1060, the processor 399 may identify the current input to the battery 310 through the monitoring circuit and determine whether the battery 310 is discharging based on the result of the identification. When it is identified that a current having a magnitude greater than or equal to a predetermined second threshold is output from the battery 310, the processor 399 may determine that the battery 310 is discharging and perform operation 1070. When the magnitude of the current flowing out of the battery 310 is less than the second threshold, the processor 399 may perform operation 1010 again. In operation 1070, the processor 399 may request the power supply device through the communication circuit 341 to increase the output voltage of the power supply device to stop discharging the battery 310. The processor 399 may control the power supply device through the communication circuit 341 to increase the output voltage by one step by a unit voltage value. When it is determined that the battery 310 is still being discharged as a result of monitoring the battery 310 after waiting for a predetermined unit time, the processor 399 may control the power supply device to increase the output voltage by one step. The output voltage may be stepped up until it transitions to a stopped-discharge condition. In another example, the processor 399 may control the power supply device through the communication circuit 341 to increase the output voltage by a specified amount, e.g., an amount determined by the processor 399.

Operations 1030 and 1060 may be incidental or optional operations for more accurately confirming whether the battery 310 is charged and discharged, and thus at least one of operations 1030 and 1060 may be omitted. For example, when the SOC has increased by more than the first value than the reference value, the processor 399 may determine that the battery 310 is being charged and perform operation 1040. When the SOC is decreased by a second value or more from the reference value, the processor 399 may determine that the battery 310 is being discharged and perform operation 1070. Additionally, it will be appreciated that the order of operations shown in Fig. 10 may be changed; for example, operation 1050 may be performed before operation 1020.

In FIG. 10, the reference value may be set using VBAT instead of SOC, and periodic identification for comparison may also be VBAT.

In various embodiments, an electronic device (e.g., the electronic device 300 of FIG. 3) may include: a battery; a load circuit (e.g., the load circuit 360 of FIG. 3) configured to receive power; a connector (e.g., the connector 320 of FIG. 3) including a power terminal and a data terminal; a direct charging circuit (e.g., the direct charging circuit 350 of FIG. 3) including a first input terminal connected to the power terminal and a first output terminal connected to the battery and the load circuit and configured to convert a voltage value and a current value of a power signal input to the first input terminal from an external device, wherein the direct charging circuit lowers the voltage of the power signal input to the first input terminal by 1/N and increases the current by N times to output the voltage to the battery and/or the load circuit through the first output terminal; a switching charging circuit (e.g., the switching charging circuit 342 of FIG. 3) including a second input terminal connected to the power terminal and a second output terminal connected to connector and the load circuit and configured to convert at least one of a voltage value and a current value of a power signal input through the second input terminal from the external device to output converted values to the battery and/or the load circuit through the second output terminal; a communication circuit configured to communicate with the external device through the data terminal; a processor (e.g., the processor 399 of FIG. 3) operatively connected to the direct charging circuit, the switching charging circuit, and the communication circuit, the processor included in the load circuit; and a memory operatively connected to the processor. The memory, when executed, may store instructions to cause the processor to recognize that an external device connected to the connector is a power supply device having a function of changing a voltage value and a current value through the communication circuit, select the direct charging circuit as a charging circuit through which the power signal received from the power supply device through the power supply terminal is to pass, based on the recognition, identify the voltage of the battery while the direct charging circuit is selected, based on the occurrence of a specified event, and request the power supply device through the communication circuit to output a power signal having a voltage value that is N times the battery voltage.

The instructions may cause the processor to output a power signal having the same voltage as the battery voltage through the first output terminal of the direct charging circuit.

The instructions may cause the processor to recognize a user input requesting the processor to execute a specified application or execution of the application in the electronic device, as the event. The application may include a game application.

The instructions may cause the processor to identify a charge amount of the battery, and request the power supply device through the communication circuit to output a power signal having a voltage value that is N times the battery voltage when the amount of charge is greater than or equal to a specified value.

The instructions may cause the processor to lower the operating frequency for operating the direct charging circuit after the request.

The instructions may cause the processor to set a second operating frequency lower than the first operating frequency as the operating frequency of the direct charging circuit when the operating frequency of the direct charging circuit is set to the first operating frequency and the current value of the power signal output from the first output terminal of the direct charging circuit is less than or equal to a reference value.

The instructions may cause the processor to display a setting menu on the display of the electronic device for allowing a user to set whether or not to activate a request to the power supply device to output a power signal having a voltage value that is N times the battery voltage, store the setting information indicating whether the activation is set through the setting menu in the memory, and perform the request, based on the setting information.

The instructions may cause the processor to provide the setting menu through the setting screen for setting related to the execution of the game application, and perform the request, based on the game application being executed on the electronic device and the setting information.

The instructions may cause the processor to identify the first charge amount of the battery and set the first charge amount as a reference value for comparing with the charge amount to be identified later, after the request, identify the second charge amount of the battery, after setting the reference value, and request the power supply device through the communication circuit to lower or increase the output voltage, based on a result of comparing the second charge amount with the reference value.

The instructions may cause the processor to request the power supply device to lower the output voltage by one step by a specified unit when the second charge amount is greater than the reference value and current flows to the battery through the power line, and request the power supply device to increase the output voltage by one step by the unit when the second charge amount is less than the reference value and current flows from the battery to the power line.

In various embodiments, a method of operating an electronic device (e.g., the electronic device 300 of FIG. 3). The electronic device may include: a battery; a load circuit configured to receive power; a connector including a power terminal and a data terminal; a direct charging circuit including a first input terminal connected to the power terminal and a first output terminal connected to the battery and the load circuit and configured to convert a voltage value and a current value of a power signal input to the first input terminal from an external device, wherein the direct charging circuit lowers the voltage of the power signal input to the first input terminal by 1/N and increases the current by N times to output the voltage to the battery and/or the load circuit through the first output terminal; a switching charging circuit including a second input terminal connected to the power terminal and a second output terminal connected to the battery and the load circuit and configured to convert at least one of a voltage value and a current value of a power signal input through the second input terminal from the external device to output converted values to the battery and/or the load circuit through the second output terminal; and a communication circuit configured to communicate with the external device through the data terminal. The method may include: recognizing that an external device connected to the connector is a power supply device having a function of changing a voltage value and a current value through the communication circuit; selecting the direct charging circuit as a charging circuit through which the power signal received from the power supply device through the power supply terminal is to pass, based on the recognition; and identifying (e.g., operation 940) the voltage of the battery while the direct charging circuit is selected, based on the occurrence of a specified event, and requesting (e.g., operation 950) the power supply device through the communication circuit to output a power signal having a voltage value that is N times the battery voltage.

The method may further include outputting a power signal having the same voltage as the battery voltage to the power line through the first output terminal of the direct charging circuit.

The method may further include recognizing a user input requesting the processor to execute a specified application or execution of the application in the electronic device, as the event.

The requesting the power supply device through the communication circuit to output a power signal having a voltage value that is N times the battery voltage may include identifying a charge amount of the battery; and requesting the power supply device through the communication circuit to output a power signal having a voltage value that is N times the battery voltage when the amount of charge is greater than or equal to a specified value.

The method may further include lowering the operating frequency for operating the direct charging circuit after the request (e.g., operation 970).

The lowering the operating frequency may include setting a second operating frequency lower than the first operating frequency as the operating frequency of the direct charging circuit when the operating frequency of the direct charging circuit is set to the first operating frequency and the current value of the power signal output from the first output terminal of the direct charging circuit is less than or equal to a reference value.

The method may further include displaying a setting menu on the display of the electronic device for allowing a user to set whether or not to activate a request to the power supply device to output a power signal having a voltage value that is N times the battery voltage; and storing the setting information indicating whether the activation is set through the setting menu in the memory, wherein the requesting is performed based on the setting information.

The method may further include identifying a first charge amount of the battery and setting the first charge amount as a reference value for comparison with a charge amount to be identified later, after the request (e.g., operation 1001); identifying a second charge amount of the battery after setting the reference value (e.g., operation 1010); and requesting the power supply device through the communication circuit to lower or increase the output voltage, based on a result of comparing the second charge amount with the reference value.

The requesting the power supply device through the communication circuit to lower or increase the output voltage may include: requesting the power supply device to lower the output voltage by one step by a specified unit when the second charge amount is greater than the reference value and current flows to the battery through the power line; and requesting the power supply device to increase the output voltage by one step by the unit when the second charge amount is less than the reference value and current flows from the battery to the power line.

It will be understood that the present disclosure also includes each of the above-described embodiments in any combination thereof.

According to a first embodiment, there is provided an electronic device comprising: a battery; a load circuit configured to receive power; a connector including a power terminal and a data terminal; a direct charging circuit including a first input terminal connected to the power terminal and a first output terminal connected to the battery and the load circuit and configured to convert a voltage value and a current value of a power signal input to the first input terminal from an external device such that the direct charging circuit lowers the voltage of the power signal input to the first input terminal by 1/N and increases the current by N times to output the voltage to the battery and/or the load circuit through the first output terminal; a communication circuit configured to communicate with the external device through the data terminal; a processor operatively connected to the direct charging circuit and the communication circuit, the processor included in the load circuit; and a memory operatively connected to the processor. The memory stores instructions to, when executed, cause the processor to: recognize through the communication circuit that an external device connected to the connector is a power supply device having a function of changing a voltage value and a current value. The instructions cause the processor to, based on the occurrence of a specified event and the recognition, identify the voltage of the battery and request the power supply device through the communication circuit to output a power signal having a voltage value that is N times the battery voltage. The power signal is received at the direct charging circuit.

According to a second embodiment, there is provided the electronic device of the first embodiment, further comprising a switching charging circuit including a second input terminal connected to the power terminal and a second output terminal connected to the battery and the load circuit and configured to convert at least one of a voltage value and a current value of a power signal input through the second input terminal from the external device to output converted values to the battery and/or the load circuit through the second output terminal; wherein the instructions cause the processor to: select, based on the recognition, the direct charging circuit as a charging circuit through which the power signal received from the power supply device through the power supply terminal is to pass; and identify the voltage of the battery and request the power supply device through the communication circuit to output the power signal having the voltage value that is N times the battery voltage while the direct charging circuit is selected.

According to a third embodiment, there is provided the electronic device of the first embodiment or the second embodiment, wherein the instructions cause the processor to lower the operating frequency for operating the direct charging circuit after the request.

According to a fourth embodiment, there is provided the electronic device of the third embodiment, wherein the instructions cause the processor to, in case that the operating frequency of the direct charging circuit is set to a first operating frequency and the current value of the power signal output from the first output terminal of the direct charging circuit is less than or equal to a reference value, set a second operating frequency lower than the first operating frequency as the operating frequency of the direct charging circuit.

According to a fifth embodiment, there is provided the electronic device of the fourth embodiment, wherein the instructions cause the processor to: in case that the operating frequency of the direct charging circuit is set to the second operating frequency, the battery is being charged and the current value of the power signal output from the first output terminal of the direct charging circuit is greater than or equal to the reference value, set the first operating frequency as the operating frequency of the direct charging circuit.

According to a sixth embodiment, there is provided the electronic device of any of the first to fifth embodiments, wherein the instructions cause the processor to determine whether the battery is being discharged based on a characteristic of the battery.

According to a seventh embodiment, there is provided the electronic device of the sixth embodiment, wherein the characteristic includes one or more of a voltage of the battery (e.g., VBAT), an amount of charge in/of the battery (e.g., SOC), and a current value of a power signal flowing into the battery.

According to an eighth embodiment, there is provided the electronic device of the seventh embodiment, wherein determining whether the battery is being discharged comprises one or more of: determining whether the voltage of the battery is less than a reference voltage, determining whether the amount of charge of the battery is less than a reference charge amount, and determining whether the current value of the power signal flowing into the battery is decreasing.

According to a ninth embodiment, there is provided the electronic device of any of the sixth to eighth embodiments, wherein the instructions cause the processor to: when it is determined that the battery is being discharged, control communication with the power supply device to increase the voltage of the power signal output by the power supply device.

According to a tenth embodiment, there is provided the electronic device of the ninth embodiment, wherein the instructions cause the processor to: when it is determined that the battery is being discharged, control communication with the power supply device to increase a voltage output from the power supply device, to the electronic device, by a unit voltage value.

According to an eleventh embodiment, there is provided the electronic device of the tenth embodiment, wherein the instructions cause the processor to: determine whether the battery is being discharged based on a characteristic of the battery, at a predetermined unit time after the voltage output to the electronic device is increased by the unit voltage value; and, if the battery is still determined to be discharged, control communication with the power supply device to increase a voltage output from the power supply device, to the electronic device, by the unit voltage value.

The embodiments of the present document disclosed in the present specification and drawings are merely presented as specific examples to easily explain the technical contents according to the embodiments of the present document and help the understanding of the embodiments of the present document, and it is not intended to limit the scope of the embodiments herein. Therefore, in the scope of various embodiments of this document, in addition to the embodiments disclosed herein, all changes or modifications derived from the technical ideas of various embodiments of this document should be construed as being included in the scope of various embodiments of this document.

Each of the features disclosed in this specification (including any accompanying claims, abstract and drawings), including each of the individual operations (steps) of any method or process disclosed herein, may be combined with any one or more of the other features disclosed in this specification in any combination, with the possible exception of any combinations where at least some of such features and/or steps are mutually exclusive as would be understood by the skilled person. In other words, all combinations of the embodiments and/or examples disclosed herein are envisaged and are therefore included within the scope of the disclosure, and should be regarded as explicitly disclosed herein.

## Claims

1. An electronic device comprising:
a battery;
a load circuit configured to receive power;
a connector including a power terminal and a data terminal;
a direct charging circuit including a first input terminal connected to the power terminal and a first output terminal connected to the battery and the load circuit and configured to convert a voltage value and a current value of a power signal input to the first input terminal from an external device such that the direct charging circuit lowers the voltage of the power signal input to the first input terminal by 1/N and increases the current by N times to output the voltage to the battery and/or the load circuit through the first output terminal;
a switching charging circuit including a second input terminal connected to the power terminal and a second output terminal connected to the battery and the load circuit and configured to convert at least one of a voltage value and a current value of a power signal input through the second input terminal from the external device to output converted values to the battery and/or the load circuit through the second output terminal;
a communication circuit configured to communicate with the external device through the data terminal;
a processor operatively connected to the direct charging circuit, the switching charging circuit, and the communication circuit, the processor included in the load circuit; and
a memory operatively connected to the processor,
wherein the memory stores instructions to, when executed, cause the processor to:
recognize through the communication circuit that an external device connected to the connector is a power supply device having a function of changing a voltage value and a current value;
select, based on the recognition, the direct charging circuit as a charging circuit through which the power signal received from the power supply device through the power supply terminal is to pass; and
while the direct charging circuit is selected, based on the occurrence of a specified event, identify the voltage of the battery and request the power supply device through the communication circuit to output a power signal having a voltage value that is N times the battery voltage.

2. The electronic device of claim 1, wherein the instructions cause the processor to output a power signal having the same voltage as the battery voltage through the first output terminal of the direct charging circuit.

3. The electronic device of claim 1, wherein the instructions cause the processor to recognize, as the event, a user input requesting the processor to execute a specified application or execution of the application in the electronic device.

4. The electronic device of claim 3, wherein the application includes a game application.

5. The electronic device of claim 1, wherein the instructions cause the processor to:
identify an amount of charge of the battery; and
request the power supply device, through the communication circuit, to output a power signal having a voltage value that is N times the battery voltage in case that the amount of charge is greater than or equal to a specified value,
where N is a natural number of value 2 or more.

6. The electronic device of claim 1, wherein the instructions cause the processor to lower the operating frequency for operating the direct charging circuit after the request.

7. The electronic device of claim 6, wherein the instructions cause the processor to, in case that the operating frequency of the direct charging circuit is set to a first operating frequency and the current value of the power signal output from the first output terminal of the direct charging circuit is less than or equal to a reference value, set a second operating frequency lower than the first operating frequency as the operating frequency of the direct charging circuit.

8. The electronic device of claim 1, wherein the instructions cause the processor to:
display, on the display of the electronic device, a setting menu for allowing a user to set whether or not to request the power supply device to output a power signal having a voltage value that is N times the battery voltage;
store setting information acquired through the setting menu in the memory; and
recognize, as the event, that the user has set to request the power supply device to output a power signal, based on the setting information.

9. The electronic device of claim 8, wherein the instructions cause the processor to:
provide the setting menu through a setting screen related to the execution of a game application; and
perform the request, based on the game application being executed on the electronic device and the setting information.

10. The electronic device of claim 1, wherein the instructions cause the processor to:
identify a first charge amount of the battery and set the first charge amount as a reference value, after the request;
identify a second charge amount of the battery, after setting the reference value; and
request the power supply device through the communication circuit to lower or increase the output voltage of power supply device, based on a result of comparing the second charge amount with the reference value.

11. The electronic device of claim 10, wherein the instructions cause the processor to:
request the power supply device to lower the output voltage by one step by a specified unit in case that the second charge amount is greater than the reference value and current flows to the battery through the power line; and
request the power supply device to increase the output voltage by one step by the unit in case that the second charge amount is less than the reference value and current flows from the battery to the power line.

12. The electronic device of claim 11, wherein the instructions cause the processor to:
identify the second charge amount of the battery according to a predetermined period after identifying the first charge amount of the battery.

13. The electronic device of claim 12, wherein the predetermined period corresponds to a time period or a number of processing cycles of the processor.

14. The electronic device of claim 1, wherein the instructions cause the processor to:
determine that the battery is being discharged or charged based on one or more of: a voltage of the battery, an amount of charge of the battery, and a power value of a power signal being suppled from the battery to the load circuit; and
if the battery is being discharged, request the power supply device to increase the output voltage, or
if the battery is being charged. request the power supply device to decrease the output voltage.

15. A method of operating an electronic device, wherein the electronic device comprises:
a battery;
a load circuit configured to receive power;
a connector including a power terminal and a data terminal;
a direct charging circuit including a first input terminal connected to the power terminal and a first output terminal connected to the battery and the load circuit and configured to convert a voltage value and a current value of a power signal input to the first input terminal from an external device such that the direct charging circuit lowers the voltage of the power signal input to the first input terminal by 1/N and increases the current by N times to output the voltage to the battery and/or the load circuit through the first output terminal;
a switching charging circuit including a second input terminal connected to the power terminal and a second output terminal connected to the battery and the load circuit and configured to convert at least one of a voltage value and a current value of a power signal input through the second input terminal from the external device to output converted values to the battery and/or the load circuit through the second output terminal; and
a communication circuit configured to communicate with the external device through the data terminal,
the method comprising:
recognizing that an external device connected to the connector is a power supply device having a function of changing a voltage value and a current value through the communication circuit;
selecting, based on the recognition, the direct charging circuit as a charging circuit through which the power signal received from the power supply device through the power supply terminal is to pass; and
while the direct charging circuit is selected, based on the occurrence of a specified event, identifying the voltage of the battery and requesting the power supply device through the communication circuit to output a power signal having a voltage value that is N times the battery voltage.
